# EUROPEAN PATENT APPLICATION

(11) **EP 4 358 465 A1**
(43) Date of publication of application: **24.04.2024**
(21) Application number: 21945881.7
(22) Date of filing: 14.06.2021
(51) Int. Cl.: H04L 7/06, H04L 25/38

(54) **CONTROL/MONITOR SIGNAL TRANSMISSION SYSTEM**

(71) Applicant: Anywire Corporation, Nagaokakyo-shi, Kyoto 617-8550 (JP)
(72) Inventor: HAMANAKA, Junichi, Nagaokakyo-shi, Kyoto 617-8550 (JP); TANAKA, Yasunori, Nagaokakyo-shi, Kyoto 617-8550 (JP); SUGAYA, Tsutomu, Nagaokakyo-shi, Kyoto 617-8550 (JP)
(74) Representative: Gulde & Partner
(86) International application number: PCT/JP2021/022483
(87) International publication number: WO 2022/264201

(57) **Abstract**

A control and monitoring signal transmission system according to the present invention includes a master station that transmits and receives data to and from a control unit, and a plurality of remote stations that transmit and receive data to and from the master station by a transmission synchronization method via a common transmission line. Then, in the period between the clock voltage ranges of the voltage clock signal having a predetermined period and duty ratio, when the impedance of the circuit at the first state of the first voltage level set to the target after changing the voltage level becomes higher than the impedance at the start state before changing the voltage level, which circuit composed of a plurality of internal circuits of the remote stations and the transmission line, the impedance is changed to the first voltage level via a second voltage level that takes a second state wherein the impedance is lower than the impedance at the first state.

## Description

### TECHNICAL FIELD

The present invention relates to a control and monitoring signal transmission system wherein a signal line between a master station provided on a control side and a plurality of slave stations provided on a controlled side is reduced in wiring, connected by a common transmission line, and data is transmitted by a transmission synchronization method such as synchronizing with a transmission clock.

In a system for centrally controlling a large number of devices arranged in a facility, a so-called wiring saving, in which the number of wirings is reduced, is widely implemented. Then, as a general method of the wiring saving, to replace the parallel connection directly connecting each of a plurality of devices provided on the controlled side to the control unit provided on the control side, it has been widely adopted a system wherein a master station and a plurality of slave stations having a conversion function of a parallel signal and a serial signal, respectively connected to the control unit and a plurality of devices, and, the master station and a plurality of slave stations perform transmitting and receiving data by using a serial signal via a common transmission line between a plurality of remote stations.

As a method of transmitting and receiving data using a serial signal via a common transmission line, a transmission synchronization method such as synchronizing with a transmission clock is known. Various methods have been proposed for transmitting and receiving data between a master station and a plurality of remote stations by transmission synchronization.

For example, in JP 2002-16621 A, a control and monitoring signal transmission system is proposed, wherein a control signal is output from a master station in a first half range of one cycle of a clock in a series pulse voltage signal, in which the second half of one cycle of the clock is set as a power supply voltage and the first half is set as a range of a potential different from the power supply voltage, and a signal having a higher frequency than the clock (hereinafter referred to as a "frequency signal") is output from a remote station as a monitoring signal in the second half range.

Furthermore, in JP 2002-152864 A, a control and monitoring signal transmission system is proposed, wherein a series pulse voltage signal in which the second half of one cycle of the clock is a power supply voltage and the first half is a voltage level range different from the power supply voltage, the first half of one cycle of the clock is time-divided, and the control signal from the master station and the monitoring signal from the remote station are output in the divided range.

### PRIOR ART DOCUMENTS

### PATENT DOCUMENT

[Patent Document 1] JP 2002-16621 A
[Patent Document 2] JP 2002-152864 A

### SUMMARY OF THE INVENTION

### PROBLEM TO BE SOLVED BY THE INVENTION

In order to function as a clock, a clock voltage range in a series pulse voltage signal (hereinafter referred to as a "voltage clock signal") for synchronizing between a master station and a plurality of remote stations needs to maintain a constant voltage level for a predetermined time. That is, the voltage clock signal needs to have a duty ratio equal to or greater than a predetermined value.

Therefore, as in the above-described prior art, it has been proposed to use a frequency signal as a method of using a clock voltage range (the second half of one cycle of the clock set as the power supply voltage in the above-described prior art) for data transfer while maintaining the duty ratio of the voltage clock signal at a predetermined value or more. However, when the frequency becomes a high frequency of a 1MHz degree, the amplitude of the current change decreases due to the inductance of the transmission line, or the amplitude becomes unstable due to a transient phenomenon, and thus the frequency signal cannot be detected in some cases. That is, the clock voltage range in the voltage clock signal may not be used as a data transfer range.

On the other hand, the potential change in the period between the clock voltage ranges in the voltage clock signal has a small influence on the synchronization. Therefore, as in the above-described prior art, it has been proposed to use a period between clock voltage ranges (a range having a voltage level different from the power supply voltage in the above-described prior art) for transmitting and receiving data between the master station and the remote station. The voltage clock signal used in this case has a predetermined period in order to perform transmitting and receiving data between the master station and the remote station in a period between the clock voltage ranges.

However, when the period between the clock voltage ranges is used for transmitting and receiving data between the master station and the remote station, the voltage level change blunts due to the impedance or the like of the circuit when the voltage level changes, so-called transient phenomenon occurs, there is a problem that the accuracy of transmitting and receiving data is lowered due to the influence of this transient phenomenon.

For example, when the voltage level is changed by combination of a P-channel MOS type FET and a capacitor, the voltage level change blunts when the voltage level of the clock voltage range of the high potential in the voltage clock signal is changed to a voltage level different therefrom (hereinafter, referred to as "falling edge"), and therefore, when the falling edge of the clock voltage range is set as the base point of synchronization, a shift occurs in the timing of synchronization, and a voltage level different from the voltage level that should be detected is detected, so that the data value extracted using the voltage level may be erroneous.

Further, due to the characteristics of the circuit configuration, since the voltage level change blunts in small range at the time of the change from the voltage level different from the voltage level of the clock voltage range of the high potential to the voltage level of the clock voltage range (hereinafter, referred to as "rising edge"), the transient period becomes shorter than the transient period at the falling edge, when extracting the data value using the time width from the synchronization base point (falling edge) to the rising edge, there is a case where the data value to be extracted is erroneous.

Moreover, since the voltage level change blunts due to the circuit configuration regardless of the period of the voltage clock signal, the earlier the period, the greater the influence on the accuracy of transmitting and receiving data.

Therefore, an object of the present invention is to provide a control and monitoring signal transmission system capable of improving the accuracy of transmitting and receiving data using a period between clock voltage ranges of voltage clock signals having a predetermined period and duty ratio.

### MEANS FOR SOLVING THE PROBLEMS

A control and monitoring signal transmission system according to the present invention includes a master station that transmits and receives data to and from a control unit, and a plurality of remote stations that transmit and receive data to and from the master station by a transmission synchronization method via a common transmission line. Then, in the period between the clock voltage ranges of the voltage clock signal having a predetermined period and duty ratio, when the impedance of the circuit at the first state of the first voltage level set to the target after changing the voltage level becomes higher than the impedance at the start state before changing the voltage level, which circuit composed of a plurality of internal circuits of the remote stations and the transmission line, the impedance is changed to the first voltage level via a second voltage level that takes a second state wherein the impedance is lower than the impedance at the first state.

### EFFECT OF THE INVENTION

According to the present invention, when the impedance of the circuit at the first state of the first voltage level set to the target after changing the voltage level becomes higher than the impedance at the start state before changing the voltage level, which circuit composed of a plurality of internal circuits of the remote station and the transmission line, the impedance is changed to the first voltage level via a second voltage level that takes a second state wherein the impedance is lower than the impedance at the first state, so that it is possible to shorten the transient period. That is, it is possible to suppress the deviation caused in the timing of the synchronization caused by the transient period to be small. Therefore, it is possible to improve the accuracy of transmitting and receiving data using the period between the clock voltage ranges of the voltage clock signal.

### BRIEF DESCRIPTION OF THE FIGURES

[Fig. 1] FIG 1 is a time chart of a transmission signal according to an embodiment of a control and monitoring signal transmission system according to the present invention.
[Fig. 2] It is a system configuration diagram of the embodiment.
[Fig. 3] It is a functional block diagram of the master station.
[Fig. 4] It is a schematic diagram showing a transmission procedure of the transmission signal.
[Fig. 5] It is a functional block diagram of the input remote station.
[Fig. 6] It is a functional block diagram of the output remote station.
[Fig. 7] It is a time chart diagram of a transmission signal in another embodiment of the control and monitoring signal transmission system according to the present invention.

### DESCRIPTION OF EMBODIMENTS

Embodiments of a control and monitoring signal transmission system according to the present invention will be described.

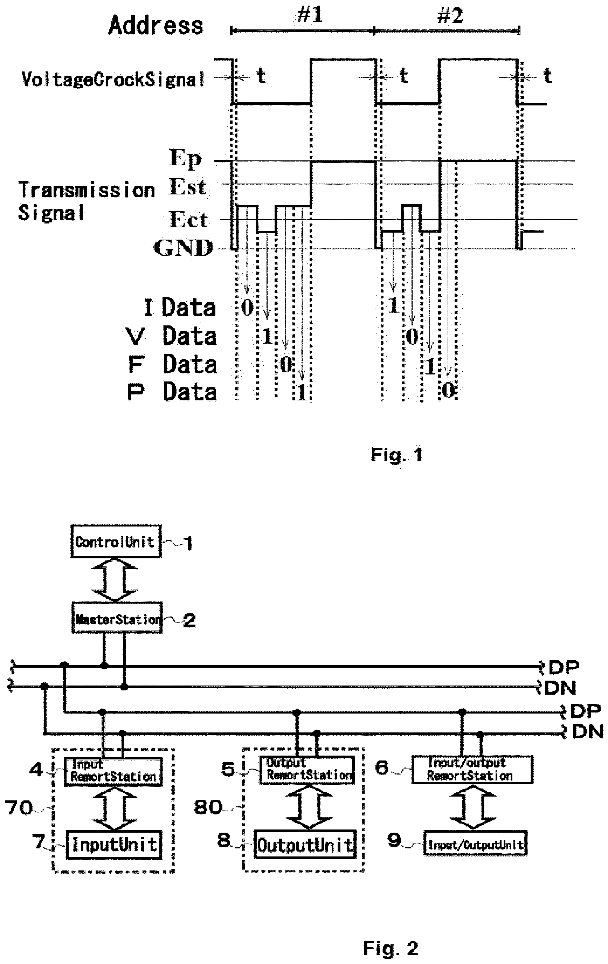

This control and monitoring signal transmission system is for centrally controlling a large number of devices arranged in a facility such as a factory in a control unit. As illustrated in FIG 2, it is configured with a master station 2 connected to a control unit 1 and a common-data-signal line DP, DN (hereinafter referred to as a transmission line), and, a plurality of input remote stations 4, output remote stations 5 and input/output remote stations 6 arranged in a facility to be controlled and connected to a transmission line. In FIG 2, for convenience of illustration, each remote station is shown one by one, but the type and number of remote stations connected to the transmission line are not limited.

The input unit 7 to which the input remote station 4 is connected, the output unit 8 to which the output remote station 5 is connected, and the input/output unit 9 to which the input/output remote station 6 is connected are devices arranged in a facility to be controlled.

Examples of the input unit 7 include, but are not limited to, a reed switch, a micro switch, a push button switch, a photoelectric switch, and various other sensors.

Examples of the output unit 8 include, but are not limited to, an actuator, a (stepping) motor, a solenoid, a solenoid valve, a relay, a thyristor, and a lamp.

The input/output unit 9 is a device having the functions of both the input unit 7 and the output unit 8. For example, a device such as a temperature controller, a timer, and a counter that has both a function of transmitting information to the master station 2 and a function of performing an output operation based on data transmitted from the master station 2 can be cited.

The input unit 7 may be an input unit integrated remote station 70 integrated with the input remote station 4. Further, the output unit 8 may be an output unit integrated remote station 80 integrated with the output remote station 5.

The control unit 1 includes a management determination unit 11 having an arithmetic processing function and an input/output unit 12. The management determination unit 11 receives data from the master station 2 via the input/output unit 12, and performs necessary arithmetic processing based on a program stored therein.

### <Master station configuration>

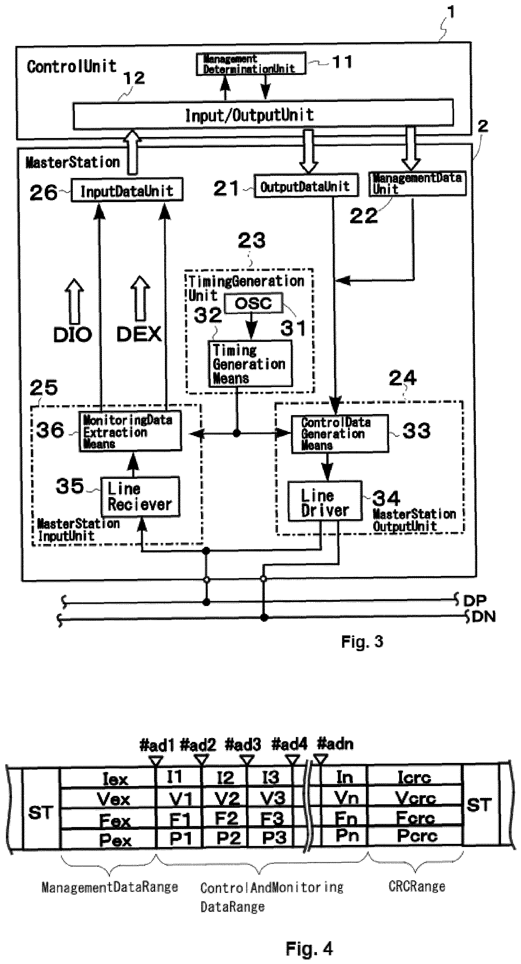

The master station 2 is connected to a transmission line, and as shown in FIG 3, includes an output data unit 21, a management data unit 22, a timing generation unit 23, a master station output unit 24, a master station input unit 25, and an input data unit 26. Then, the control data is output as it is included in the voltage clock signal having a predetermined cycle and duty ratio, and the monitoring data output from the input remote station 4, the output remote station 5 and the input-output remote station 6 in a period between the clock voltage ranges of the voltage clock signal is extracted, and is output to the input-output unit 12 of the control unit 1.

The output data unit 21 passes the data received from the control unit 1 as serial data to the master station output unit 24.

Basing on the data received from the control unit 1, the management data unit 22 passes data necessary for instruction by a management control data area to the remote station, as serial data, to the master station output unit 24, which area is to be described later.

The timing generation unit 23 includes an oscillation circuit (OSC) 31 and timing generation means 32, timing generation means 32 generates a timing clock of the system basing on the oscillation circuit (OSC) 31 and passes the generated timing clock to the master station output unit 24 and the master station input unit 25.

The master station output unit 24 includes a control data generation means 33 and a line driver 34. The control data generating means 33 outputs a voltage clock signal including control data to the transmission line via the line driver 34 basing on the data received from the output data unit 21 and the timing clock received from the timing generating unit 23.

As shown in FIG 1, the voltage clock signal includes a plurality of clock voltage ranges continuing in line wherein a voltage level Ep higher than the threshold Est is maintained for a predetermined period of time. In this embodiment, the voltage-level Ep is set to +24V.

The clock voltage range is not limited as long as it functions as a synchronous clock, and can be appropriately determined according to the use environment and the use state. For example, it may be a negative voltage being maintained lower than the ground level for a predetermined period of time.

In the period between the clock voltage ranges, the data value is indicated by a voltage level lower than the voltage level Ep of the clock voltage range. However, the voltage level indicating the data value may be appropriately determined according to the use environment or the use state, and may be a voltage level higher than the voltage level Ep of the clock voltage ranges. The same applies even if the voltage level Ep in the clock voltage ranges is a negative voltage lower than the ground level.

Further, in this embodiment, the impedance of the circuit composed of the internal circuits of all the remote stations 4, 5, 6 (hereinafter, referred to as "transmission circuit impedance") and transmission lines is larger than the clock voltage range in a state (first state) of taking a voltage level indicating a data value. Then, a transient phenomenon occurs when the voltage level Ep of the clock-voltage ranges is changed to a voltage level indicating the data value.

The period between the clock voltage ranges is time-divided into four ranges. In the following explanation, the four ranges of the period between the clock voltage ranges are referred to as an I range, a V range, an F range, and a P range in order of being closer to the transient period t wherein the voltage level drops from the voltage level Ep of the clock voltage range.

In this embodiment, in the I range, the V range, and the F range, the voltage potential lower than the threshold value Ect is set as the voltage level to indicate the logical data value "1", and the voltage potential higher than the threshold value Ect is set as the voltage level to indicate the logical data value "0". In this embodiment, the threshold Ect is set (approximately 6V) between 10V and the ground level, but the potential thereof is not limited, and may be set according to the use state or the use environment. The correspondence relationship between the voltage level to indicate the data value and the logical data value is not limited, and can be appropriately determined according to the use environment and the use state.

The P range of this embodiment is used only for outputting from the master station 2, and the voltage potential lower than the threshold value Ect is set as the voltage level to indicate the logical data value "1", and the voltage potential higher than the threshold value Ect is set as the voltage level to indicate the logical data value "0". Then, by increasing the time width of the range having a high voltage level, that is, by increasing the duty ratio to be larger than the set value, it is possible to make the range less susceptible to noise and to enhance the stability of the clock function. Like the I range, the V range, and the F range, there is no restriction on the correspondence between the voltage level to indicate the data value and the logical data value, and it can be determined as appropriate according to the use environment and the use state.

When the voltage level Ep of the clock voltage domain changes to the voltage level to indicate the data value, a voltage drops to a low voltage level GND of a state (second state) wherein the transmission circuit impedance becomes lower than a state (first state) wherein the voltage level to indicate the data value is taken. Then, the voltage level is changed to a voltage level to indicate the data value through the low voltage level GND. Note that a state wherein the transmission circuit impedance is lower than a state wherein the voltage level to indicate the data value is taken can be created by, for example, setting the low voltage level GND to a level wherein charges accumulated in the circuit and the back electromotive force can be eliminated.

When the transmission circuit impedance in the state wherein the voltage level to indicate the data value is taken is smaller than the clock voltage range due to the circuit configuration or the like, for the voltage level to indicate the data value changes to the voltage level Ep of the clock voltage range, the voltage level is to be changed to the voltage level Ep of the clock voltage range through the voltage level of a state wherein the transmission circuit impedance becomes lower than the clock voltage range.

As shown in FIG 4, in transmit procedure, a series of ranges between the start signal ST and the subsequent start signal ST in the voltage clock signal, which ranges are the management data ranges, the control and monitoring data ranges, and continuing to CRC ranges, is one frame cycle. Then, the master station 2 and the input remote station 4, the output remote station 5, and the input/output remote station 6 transmit and receive the steady data using the control and monitoring data ranges.

In addition, non-steady data not being allocated to the control and monitoring data ranges is transmitted and received using the management data ranges. Furthermore, the occurrence or non-occurrence of a transmission abnormality is determined by using CRC area.

In the start signal ST, the voltage level Ep of the clock voltage ranges in the management data ranges, the control and monitoring data ranges, and CRC ranges is maintained longer than the time-width of the clock voltage ranges of those ranges. The duration of the start signal ST is not limited, and can be appropriately determined in view of usage conditions and the like.

The master station input unit 25 includes a line receiver 35 and a monitoring data extraction means 36. The line receiver 35 receives the voltage clock signal from the transmission line, performs waveform shaping, and passes it to the monitoring data extracting means 36.

The monitoring data extraction means 36 obtains a timing for extracting a data value using the timing clock delivered from the timing generation unit 23, and extracts data basing on the digital value of the voltage level of the voltage clock signal delivered from the line receiver 35. Then, it is delivered to the input data unit 26 as the steady data DIO of the control and monitoring data ranges and the management data DEX of the management data ranges.

The input data unit 26 converts the serial input data received from the monitoring data extraction means 36 into parallel data, and outputs the parallel data as monitoring data and management monitoring data to the input/output unit 12 of the control unit 1.

### <Input remote station configuration>

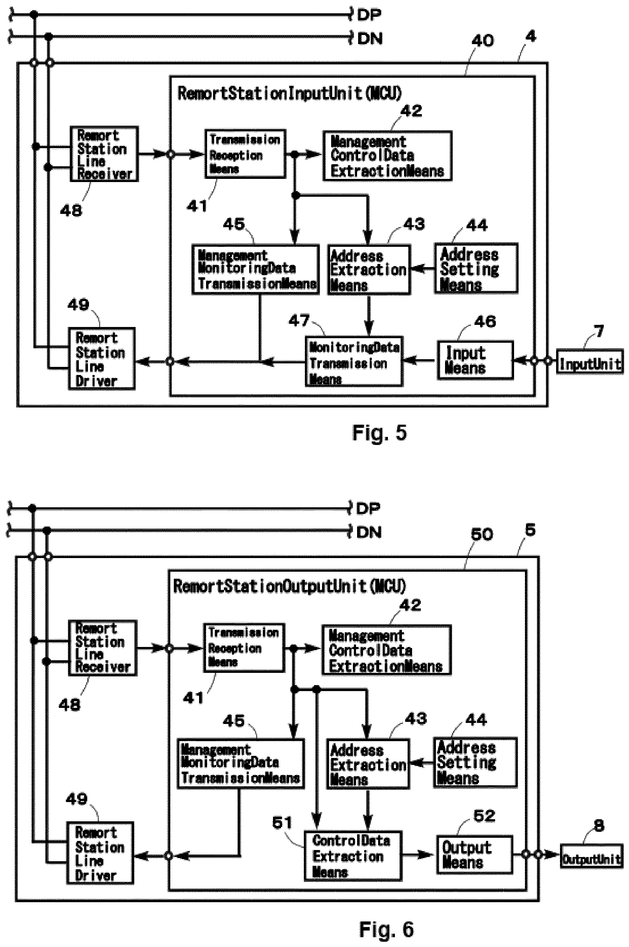

As shown in FIG 5, the input remote station 4 includes a remote station input unit 40 for executing main arithmetic processing, and a remote station line receiver 48 and a remote station line driver 49 disposed between the remote station input unit 40 and the transmission line, receives a voltage clock signal from the transmission line via the remote station line receiver 48, and outputs a monitoring signal to the transmission line via the remote station line driver 49.

The remote station input unit 40 includes a transmission reception means 41, a management control data extraction means 42, an address extraction means 43, an address setting means 44, a management monitoring data transmission means 45, an input means 46, and a monitoring data transmission means 47.

Incidentally, the input remote station 4 of this embodiment includes a MCU which is a microcomputer control unit as an internal circuit, and this MCU functions as the remote station input unit 40.

The remote station line receiver 48 receives a voltage clock signal from the transmission line, performs waveform shaping, and passes the signal to the transmission reception means 41.

The transmission receiving means 41 determines the voltage level comparing to the threshold Est and the threshold Ect, and passes the digital value of the voltage level of the voltage clock signal, which digital value is delivered from the remote station line receiver 48, to the management control data extracting means 42, to the address extracting means 43, and to the management monitoring data transmitting means 45.

The management control data extracting means 42 determines the start signal ST basing on the digital value of the voltage level of the voltage clock signal. Then, the control data is extracted basing on the digital value of the voltage level of the inter pulse range corresponding to the control data range, starting from the timing wherein the start signal ST ends (falling edge in this embodiment). The extracted management data is passed over to a not shown processing means wherein a processing basing on the data is executed.

The address extracting means 43 determines the start signal ST basing on the digital value of the voltage level of the voltage clock signal, and counts the clock voltage ranges starting from the timing wherein the start signal ST ends (falling edge in this embodiment). Then, a timing wherein the count value matches the own station address data set by the address setting means 44 is obtained. Note that this timing is a timing wherein the data area allocated to the own station in the voltage clock signal (hereinafter, referred to as "own station area") starts (hereinafter, referred to as "own station area start timing").

The address extraction means 43 also obtains timings of the I range, the V range, and the F range basing on the elapsed time starting from the falling edge of the clock voltage range.

Then, the address extracting means 43 having obtained the own station area start timing enables the monitoring data transmitting means 47 for the period of the I range, the V range, and the F range allocated to the own station. In the case where the own station area is composed of a plurality of periods between the clock voltage ranges, the monitoring data transmission means 47 is enabled for the period of the power supply voltage range every time the I range, the V range, and the F range allocated to the own station appear until the own station range ends.

The management monitoring data transmitting means 45 determines the start signal ST basing on the digital value of the voltage level of the voltage clock signal. Then, starting from the timing wherein the start signal ST ends, a signal is output in ranges set for the output of the monitoring signal among the I range, the V range, and the F range in the period between the clock voltage ranges corresponding to the management data range.

Note that the monitoring signal output from the management monitoring data transmission means 45 is transmitted only when data to be transmitted to the master station 2 is delivered from a not shown processing unit.

The input means 46 passes the data basing on the input from the input unit 7 to the monitoring data transmitting means 47.

When enabled by the address extracting means 43, the monitoring data transmitting means 47 outputs the data delivered from the input means 46 to the transmission line via the remote station line driver 49 as a monitoring signal.

### <Output remote station configuration>

As shown in FIG 6, the output remote station 5 includes a remote station output unit 50 for executing main arithmetic processing, and a remote station line receiver 48 and a remote station line driver 49 disposed between the remote station output unit 50 and the transmission line, receives a voltage clock signal from the transmission line via the remote station line receiver 48, and outputs a monitoring signal to the transmission line via the remote station line driver 49. In FIG 6, substantially the same parts as those of the input remote station 4 are denoted by the same reference numerals, and the description thereof will be simplified or omitted.

The remote station output unit 50 includes a transmission reception means 41, a management control data extraction means 42, an address extraction means 43, an address setting means 44, a management monitoring data transmission means 45, a control data extraction means 51, and an output means 52.

Similarly to the input remote station 4, the output remote station 5 of this embodiment also includes a MCU which is a microcomputer control unit as an internal circuit, and this MCU functions as the remote station output unit 50.

The transmission reception means 41 of the output remote station 5 passes the digital value of the voltage level of the voltage clock signal delivered from the remote station line receiver 48 to not only the management control data extraction means 42, the address extraction means 43, and the management monitoring data transmission means 45, but also to the control data extraction means 51.

The address extracting means 43 of the output remote station 5 obtains the own station area start timing by counting the high potential range starting from the timing wherein the start signal ST ends, and obtains the timing of the P range in the own station area basing on the elapsed time starting from the falling edge of the clock voltage range. When the I range, the V range, or the F range is allocated for output from the master station 2 to the own station, the timing thereof is also obtained.

Then, the address extracting means 43 having obtained the own station area start timing enables the monitoring data transmitting means 47 during the period of the P range allocated to the own station and, in the case where the I range, the V range, or the F range is allocated, during the period of the area. Further, in the case where the own station range is composed of a plurality of periods between the clock voltage ranges, the monitoring data transmission unit 47 is enabled for the period of the power supply voltage range every time the I range, the V range, the F range, and the P range allocated to the own station appear until the own station range ends.

When enabled by the address extracting means 43, the control data extraction means 51 extracts the control data basing on the digital value of the voltage level of the voltage clock signal delivered from the transmission receiving means 41, and passes the control data to the output means 52.

The output means 52 outputs information basing on the control data delivered from the control data extraction means 51 to the output unit 8, and operates or stops the output unit 8.

### <Input/output remote station configuration>

The input/output remote station 6 has the functions of both the input remote station 4 and the output remote station 5, and has a remote station input/output unit having both the configurations of the remote station input unit 40 and the remote station output unit 50, then the configuration being substantially the same as the remote station input unit 40 and the remote station output unit 50, illustration and description thereof are omitted.

In this embodiment, the data values in the I range, the V range, the F range, and the P range are extracted basing on the voltage level detected at a predetermined timing in the range. That is, the voltage level of the voltage clock signal is made to correspond to the data value, so that data is transmitted and received, but the duty ratio of the voltage clock signal may be made to correspond to the data value, so that data may be transmitted and received.

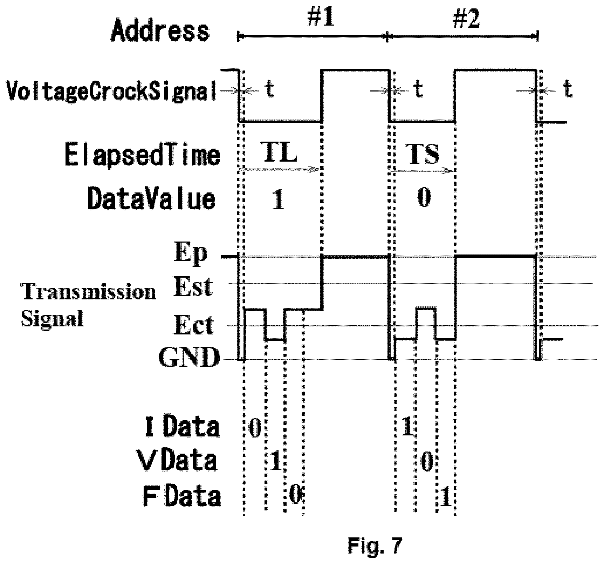

FIG 7 is a time chart of a transmission signal in an embodiment wherein data is transmitted and received by making a duty ratio of a voltage clock signal correspond to a data value. In the description of the embodiment shown in FIG 7, substantially the same parts as those of the embodiments shown in FIGS. 1 to 6 are denoted by the same reference numerals, and the description thereof will be omitted or simplified.

In the embodiment shown in FIG 7, the time width of the clock voltage range, that is, the duty ratio of the voltage clock signal corresponds to the data value. The time width of the clock voltage range can be obtained by measuring the elapsed time from the falling edge to the rising edge of the clock voltage range.

In the embodiment shown in FIG 7, since the falling edge of the clock voltage range serving as the base point of the synchronization timing appears in a fixed cycle, the elapsed time from the falling edge to the rising edge of the clock voltage range is small when the time width of the clock voltage range is large, and the elapsed time from the falling edge to the rising edge of the clock voltage range is large when the time width of the clock voltage range is small. Therefore, it is possible to determine the size of the time width of the clock voltage domain according to the length of the elapsed time.

In FIG 7, an elapsed time TL longer than a predetermined threshold indicates a data value "1" corresponding to a smaller time width, and an elapsed time TS shorter than the predetermined threshold indicates a data value "0" corresponding to a larger time width. The correspondence between the time width of the clock voltage ranges and the data value is not limited, and may be appropriately set according to the use state. However, it is necessary that the time width of the clock voltage ranges is equal to or larger than a certain width necessary to function as a clock, that is, the duty ratio has to be made larger than the set value of the voltage clock signal.

### DESCRIPTION OF REFERENCE NUMERALS

1 Control unit
2 Master station
4 Input remote station
5 Output remote station
6 Input/output remote station
7 Input unit
8 Output unit
9 Input/output unit
11 management determination unit
12 Input/output unit
21 Output data unit
22 Management data unit
23 Timing generation unit
24 Master station output unit
25 Master station input unit
26 Input data unit
31 Oscillation circuit (OSC)
32 Timing generating means
33 Control data generating means
34 Line driver
35 Monitoring signal detection means
36 Monitoring data extraction means
40 Remote station input unit
41 Transmission reception means
42 Management control data extraction means
43 Address extraction means
44 Address setting means
45 Management monitoring data transmission means
46 Input means
47 Monitoring data transmission means
48 Remote station line receiver
49 Remote station line driver
50 Remote station output unit
51 Control data extraction means
52 Output means
70 Input unit integrated remote station
80 Output unit integrated remote

## Claims

1. A control and monitoring signal transmission system comprising a master station that transmits and receives data to and from a control unit, and a plurality of remote stations that transmit and receive data to and from the master station by a transmission synchronization method via a common transmission line, wherein:
in a period between clock voltage ranges of a voltage clock signal having a predetermined period and duty ratio,
when a impedance of a circuit at a first state of a first voltage level set to a target after changing a voltage level becomes higher than the impedance at the start state before changing the voltage level, which circuit composed of a plurality of internal circuits of the remote stations and the transmission line, the impedance is changed to the first voltage level via a second voltage level that takes a second state wherein the impedance is lower than the impedance at the first state.

2. The control and monitoring signal transmission system according to claim 1, wherein the period between the clock voltage ranges is time-divided into three or more ranges.

3. The control and monitoring signal transmission system according to claim 2, wherein, in the period between the clock voltage range, a range wherein the duty ratio becomes to be larger than the predetermined duty ratio is set by accelerating a timing of changing to the voltage level of the clock voltage range.
